# EUROPEAN PATENT SPECIFICATION

(11) **EP 1 075 156 B1**
(45) Date of publication and mention of the grant of the patent: **07.07.2010**
(21) Application number: 99810704.9
(22) Date of filing: 06.08.1999
(51) Int. Cl.: H04W 88/02

(54) **Apparatus for receiving and displaying personalized information**
Apparate für das Empfangen und das Anzeigen der personifizierten Informationen
Appareils pour recevoir et afficher l'information personnalisée

(43) Date of publication of application: 07.02.2001
(73) Proprietor: Naxos Finance SA, 2453 Luxembourg (LU)
(72) Inventor: Sanchez, Andres, Panama (PA)
(74) Representative: Eisenführ, Speiser & Partner

(56) References cited:
- EP-A- 0 383 277
- EP-A- 0 748 139
- WO-A-97/30556
- FOELLING W F: "MOBILE DATEN- UND TELFAXUEBERTRAGUNG IN GSM-NETZEN" NTZ NACHRICHTENTECHNISCHE ZEITSCHRIFT,DE,VDE VERLAG GMBH. BERLIN, vol. 47, no. 8, August 1994 (1994-08), page 558-560,562-563 XP000468529 ISSN: 0027-707X

## Description

A number of services are spreading through the world, for transmitting so called personalized information, i.e. pieces of information which fit the requests or the needs of particular individuals. For instance there are services, which, through the use of a normal home telephone, allow to access stock exchange data, weather forecast data, etc. Dialling a special number you can access a data bank which transmits prerecorded or synthetized voice messages. In order to receive the desired information it is necessary to answer the questions of the bank, either by dialling special numbers or by voice if the data bank has a vocal recognition facility. The requested information is delivered by voice and this fact represents a disadvantage when the answer is a numerical data, as for instance in case of stock exchange prices, because it is difficult to memorize them.

This disadvantage is avoided with the interactive teletext services, wherein the information is requested by phone, while the answer is supplied on a given teletext page, indicated each time to the user, and displayed on the television screen. Such services are presently offered by the leading european broadcasters. The teletext transmission has nevertheless the serious disadvantage that secrecy cannot be guaranteed, which is particularly important for those services which allow to perform bank transactions from the home or from the office (home banking). It is possible to obviate taking particular measures, for instance that of avoiding to put in the bank communication either the account number or the owner's name, but in this case' the user cannot be sure that the communication received is his own communication.

EP 0 748 139 A2 discloses a communication system for transmitting text messages to a mobile terminal in a radio telephone network. A local mobile terminal is coupled to an external computer and is used to generate, manipulate and optionally store text messages which can be transmitted or received over the radio telephone network via the local mobile terminal. The text messages are transmitted to or received from a remote mobile terminal in the radio telephone network.

WO 97/30556 refers to representing graphic images to mobile terminals. Binary data representing graphic images, such as a Graphics Interchange Format (GIF) file, are converted into character based data. The converted character based data are then loaded onto an Unstructured Supplementary Service Data (USSD) message and transported to a mobile terminal via Stand-alone Dedicated Control channel (SDCCH) provided by the Global System for Mobile (GSM) or Personal Communications System (PCS) network. Once the transmitted USSD message containing the converted character based data are received by the mobile terminal, the encapsulated data are retrieved and reconverted back to th binary data representing the original GIF file. The GIF file is then fed into a video graphics array (VGA) driver to be displayed on a liquid crystal display (LC) unit attached to the mobile terminal.

Article "Mobile Daten- und Telefaxübertragung in GSM-Netzen" by Werner F. Fölling, published in Nachrichten Technische Zeitschrift, August 1994, provides an overview of possibilities of how to transmit data via GSM mobile communication.

EP 0 383 277 A2 refers to an operating system of a mobile radio telephone. An operating system of a mobile radio telephone comprises a transceiver unit, which comprises a handset hook connected to it with a cable, and at least one headset in wireless communication with the transceiver unit.

The system further comprises a separated remote control in wireless communication with the transceiver unit, the remote control being located physically separated from the handset. The handset and the remote control are in communication with the infrared transceiver, which in turn is connected by a cable to the transceiver unit of the radio telephone.

In order to solve the secrecy problem it has been proposed, in patent application WO 96/38984, to associate to the page with the useful information a secret subcode and to transmit, next to the useful page, a page with a different subcode; in this way only the user which selects the right subcode can permanently see the page on the screen, while' other users see it only for a very short time. Patent application FR 2 744 975 proposes instead to associate to the useful page an identification number, related to the television set of the interested user, so that only this user may receive the useful page.

The interactive teletext services in any case are rather complicate to implement, because they need an agreement with the company which runs the data bank and with a broadcaster, which must provide apart of the transmission resource represented by the so called "field blanking intervail", thus subtracting it to other services, like the teletext itself. Also from the technical point of view the operation is quite complex, as it is necessary to establish a connection between the data bank and the teletext generating system, and to convert the information to be sent to the user into the teletext format.

Patent application WO 97/24826 describes a device for displaying, onto the screen of a television set, the data received through the public switched telephone network. In, this case the privacy cannot be guaranteed, as the telephone signal is of the analog type and can be quite easily intercepted by third persons; moreover, in order to avoid long connecting wires, or more expensive cordless systems it is necessary, but not always possible, that the telephone terminal be located near to the television set.

Services which use mobile telephones, wherein the answer is given on the display of the mobile terminal, are easier to implement. The use of the mobile telephonic network has also obviously the advantage that the service can be accessed everywhere, even outside the home or the office. Using a digital system like the GSM (Global System for Mobile Communication) the advantage of secrecy is further available, which, as already said, is particularly important for such services like "home banking".

A few banks presently offer to their customers special accounts which comprise the possibility of renting or purchasing by instalments mobile phone apparatus in order to promote the home banking use, so that the number of people standing in line in their branch offices and, as a consequence, also the number of the required employees is reduced. However the display of a digital mobile phone is too small and also difficult to read in order to be used satisfactorily for displaying the situation of a bank account or a long message.

The European patent application EP 0 880 293 describes a system for transmitting long messages which uses the mobile GSM telephony and the above cited interactive teletext system; in the described system a first user sends to a second user a call and a short message according to a mode which is known as paging or radio notice, informing him or her that a longer and more detailed message can be found on a given teletext page. The short message, numerical or alphanumerical, can be e.g. of the SMS (Short Message Service) type. Of course the first user shall provide to send the longer message to a broadcaster, which in turn shall insert it in a teletext page; this fact involves the already described disadvantages of the interactive teletext system, beside the necessity for the second user to have at his or her disposal in short time a television receiver provided with a teletext decoder, which is not always the case.

The aim of the present invention is that of indicating an apparatus which, avoiding the above said disadvantages, allows for receiving and displaying information on the screen of a television set or a monitor, without giving up to the secrecy of a digital transmission.

In order to achieve the above said aim, the subject of the present invention is an apparatus having the characteristics which are described in the attached claims, which represent an integral part of the present description.

Further aims and advantages of the present invention will be clear from the description which follows and from the attached drawings, which are supplied as explanatory and not limiting examples only, where:
- figure 1 shows the basic schematic diagram of an apparatus for receiving and displaying information according to the invention;
- figure 2 shows a second possible implementation of the invention;
- figure 3 shows a third possible implementation of the invention For the sake of clarity in the said figures blocks having the same reference number perform similar functions.

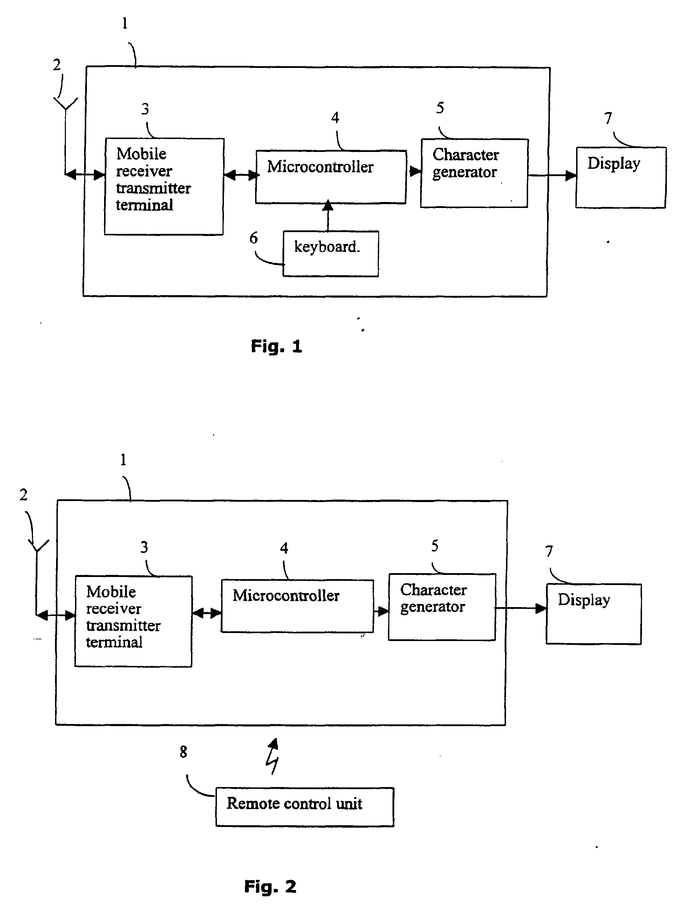

In fig. 1 reference number 1 indicates the apparatus according to the present invention, which comprises the following devices:
- an antenna, indicated by reference number 2, for receiving and transmitting digital mobile telephony signals (e.g. GSM), as that usually employed with the normal common use telephones;
- a device 3 which performs the reception and transmission functions of a digital mobile telephony terminal, e.g. GSM, but only for data reception and transmission and not for the voice, and therefore stripped of the audio coding and decoding part, the audio low frequency circuit, the display, the numerical keyboard and any function key. Practically on the received and transmitted signals only the demodulation/modulation and channel coding/decoding operations are performed. For the data transmission it can be used either the vocal channel or the already cited SMS channel reserved to messages; the latter solution is preferable as it is a better protected channel which allows the reception also in critical locations; the duration of the messages however is limited to 160 alphanumerical characters for each call. Device 3 consequently in reception demodulates and decodes the signal and delivers the data in digital form which are processed inside the apparatus, while in transmission encodes and modulates the messages which the user intends to transmit via the telephone network;

- a microcontroller, indicated by reference number 4, which controls, on the basis of an internal program, the operation of the apparatus according to the commands given by the user by means of block 6, representing a keyboard with numerical/alphanumerical keys and/or functions keys; microcontroller 4 can be provided with an internal or external non-volatile EEPROM memory for storing the received data;
- a device 5, which performs the functions of a character generator which, as known, converts the received digital information into signals representing alphanumerical characters onto a screen indicated with reference number 7. Said screen can be that of a television set or a monitor, and the signals produced by the character generator can be of the RGB type and sent to the display device through for instance the known SCART connector.

A possible operating mode can be as follows. Turning the apparatus on the microcontroller 4 provides for displaying onto the screen a menu, the data of which are stored in the microcontroller ROM. The user shall at this moment select one among the functions indicated by the menu, using the keyboard's keys for inputting digits or alphanumerical messages, calling suitable functions by means of the corresponding keys, or pressing the keys for moving a cursor onto the various functions of the menu. Once the desired function has been selected, the microcontroller automatically calls the corresponding service center, dialling the related telephone number, which has been previously stored by the user. After that the connection has been established, the user is advised and then the information exchange control is taken over by the center. The user shall send all the requested information to the center, e.g. the password, the identification number of the bank account, etc. while the apparatus will display the dialog onto the screen. Once the requested service has been obtained, the user can memorize the received data pressing a corresponding key and then stop the dialog by means of another key. Of course the memorization of the data may also be performed automatically, as well as the disconnection from the center after a given time. As a consequence, the fact that the received data are memorized internally in the apparatus, allows the user to print them at will, provided that the display device 7 is provided with or coupled to a printing facility.

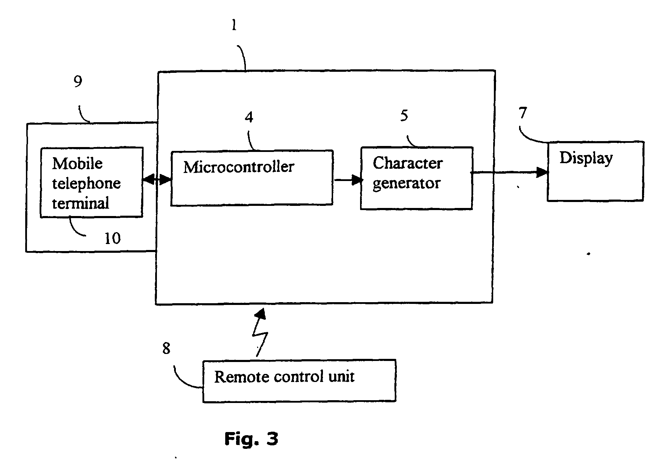

In fig. 2 the apparatus 1 is controlled by means of a remote control unit, indicated with the reference number 8, rather than by means of a keyboard, the said unit being of course provided with numerical and/or alphanumerical keys as the previously described keyboard. Generally this remote control unit should be a dedicated remote control unit, different from that normally provided with a television set. In fact it is difficult to foresee the use of such normal remote control unit for controlling the apparatus according to the invention, taking into account the high number of different remote control units available on the market and the relevant different control codes thereof. Of course if the apparatus is driven by a remote control unit it must be provided with a suitable remote control receiver, not shown in fig. 2, for converting the command signals of the remote control unit, usually of the infrared type, into electrical control signals for the microcontroller. A further variation is shown in fig. 3, where the apparatus 1, instead of the blocks 2 and 3 of fig. 2, has a support 9, onto which a normal mobile telephone terminal 10 is located; the latter must be provided with a serial data input/output connector to be coupled to a suitable socket, not shown in fig. 3, available on the support 9 for allowing the data transfer from the telephone terminal to the apparatus and viceversa. Of course the mobile phone is inserted in the support 9 only when it is desired to obtain the connection with the service center, otherwise it can be freely used for normal telephone calls.

Also in this case the use is possible of a remote control for controlling the apparatus, as indicated in fig. 3, or of a normal keyboard, as previously shown; a further possibility is that of using the keyboard of the mobile digital telephone itself.

It is clear that a number of variations can be made to the apparatus according to the present invention, without departing from the novelty principles of the inventive idea.

For instance, apparatus 1 may be an integral part of the charging device of the mobile phone. Moreover, if the data are displayed onto a television set, the signal produced from the character generator may be a base band composite television signal instead of a RGB signal; in this case a known coder, for instance according to PAL system, must follow the character generator. This is necessary if a television set with a DIN socket, instead of a SCART socket, has to be used. In case of a television set neither provided with a SCART nor with a DIN socket, the base band composite television should be used to modulate a radiofrequency carrier in order to produce a RF sifnal to be fed into the antenna input of the set.

Furthermore the character generator 5 may be of the type used in normal teletext decoders.

## Claims

1. Apparatus (1) for receiving and displaying personalized information data transmitted from a service center through a digital mobile telephone system, comprising
an antenna (2) for receiving and transmitting signals of said digital mobile telephone system, which signals comprises the personalized information data,
a device (3) for demodulating/modulating, decoding/encoding said signals, means (6, 8) for getting user commands,
a microcontroller (4) for receiving said user commands and controlling the apparatus (1) and
a character generator (5) for displaying said personalized information data on a displaying device (7) coupled to said apparatus,
wherein said antenna (2) and said device (3) are comprised in a mobile telephone terminal (10) which can be inserted into a suitable support (9) contained in said apparatus (1),
the apparatus (1) being **characterized in that** the microcontroller (4) is adapted for establishing a connection between the apparatus (1) and the service center and for allowing the service center to take over information exchange control during the established connection.

2. Apparatus for receiving and displaying data according to claim 1, **characterized in that** said mobile terminal (10) is provided with a data input/output connector coupled to a suitable socket available on said support (9).

3. Apparatus for receiving and displaying data according to claim 1, **characterized in that** said apparatus is comprised in the charging device of a digital mobile telephone terminal (10).

4. Apparatus for receiving and displaying data according to claim 1, **characterized in that** said means for getting the user commands are given by a remote control unit (8).

5. Apparatus for receiving and displaying data according to claim 1, **characterized in that** there are provided means to connect the apparatus itself with a printing facility.

6. Apparatus for receiving and displaying data according to claim 1, **characterized in that** said display device (7) is part of a television set.

7. Apparatus for receiving and displaying data according to claim 6, **characterized in that** the signal produced by the character generator (5) Is a radio frequency television signal.

8. Apparatus for receiving and displaying data according to claim 1, **characterized in that** said display device (7) is part of a PC monitor.

9. Apparatus for receiving and displaying data according to claim 1, **characterized in that** the character generator (5) is of the type used in the normal Teletext signal decoders.

## Patentansprüche

1. Vorrichtung (1) zum Empfangen und Anzeigen von personalisierten Informationsdaten, die von einem Dienstleistungszentrum über ein digitales mobiles Telefonsystem übermittelt werden, mit
einer Antenne (2) zum Empfangen und Übermitteln von Signalen des digitalen mobilen Telefonsystems, wobei Signale die personalisierten Informationsdaten beinhalten,
einem Gerät (3) zum Demodulieren/Modulieren, Dekodieren/Kodieren der Signale,
Mittel (6, 8) zum Erhalten von Benutzerbefehlen,
einem Mikrokontroller (4) zum Empfangen der Benutzerbefehle und Steuern der Vorrichtung (1) und
einem Zeichengenerator (5) zum Anzeigen der personalisierten Informationsdaten auf einem Anzeigegerät (7), das mit der Vorrichtung gekoppelt ist,
worin die Antenne (2) und das Gerät (3) in einem mobilen Telefonterminal (10) enthalten sind, das in eine passende Aufnahme (9) eingesteckt werden kann, die in der Vorrichtung (1) enthalten ist,
die Vorrichtung (1) ist **dadurch gekennzeichnet, dass** der Mikrokontroller (4) zum Aufbauen einer Verbindung zwischen der Vorrichtung (1) und dem Dienstleistungszentrum angepasst ist und dem Dienstleistungszentrum ermöglicht, die Informationsaustauschsteuerung während der aufgebauten Verbindung zu übernehmen.

2. Vorrichtung zum Empfangen und Anzeigen von Daten nach Anspruch 1, **dadurch gekennzeichnet, dass** das mobile Terminal (10) mit einem DatenEingang/Ausgang-Stecker, der mit einem passenden Sockel, der an der Aufnahme (9) vorhanden ist, ausgestattet ist.

3. Vorrichtung zum Empfangen und Anzeigen von Daten nach Anspruch 1, **dadurch gekennzeichnet, dass** die Vorrichtung in dem Ladegerät eines digitalen mobilen Telefonterminals (10) enthalten ist.

4. Vorrichtung zum Empfangen und Anzeigen von Daten nach Anspruch 1, **dadurch gekennzeichnet, dass** die Mittel zum Erhalten der Benutzerbefehle mittels einer Fernsteuerungseinheit (8) gegeben sind.

5. Vorrichtung zum Empfangen und Anzeigen von Daten nach Anspruch 1, **dadurch gekennzeichnet, dass** bereitgestellte Mittel zum Verbinden der Vorrichtung selbst mit einer Druckereinrichtung vorhanden sind.

6. Vorrichtung zum Empfangen und Anzeigen von Daten nach Anspruch 1, **dadurch gekennzeichnet, dass** das Anzeigegerät (7) ein Teil eines Fernsehgerätes ist.

7. Vorrichtung zum Empfangen und Anzeigen von Daten nach Anspruch 6, **dadurch gekennzeichnet, dass** das durch den Zeichengenerator (5) erzeugte Signal ein Funkfrequenzfernsehsignal ist.

8. Vorrichtung zum Empfangen und Anzeigen von Daten nach Anspruch 1, **dadurch gekennzeichnet, dass** das Anzeigegerät (7) ein Teil eines Computerbildschirmes ist.

9. Vorrichtung zum Empfangen und Anzeigen von Daten nach Anspruch 1, **dadurch gekennzeichnet, dass** der Zeichengenerator (5) von dem Typ ist, der in den normalen Teletextsignaldekodierern verwendet wird.

## Revendications

1. Appareil (1) pour la réception et l'affichage de données d'informations personnalisées transmises à partir d'un centre de service par l'intermédiaire d'un système de téléphone mobile numérique, comprenant :
une antenne (2) pour la réception et la transmission de signaux dudit système de téléphone mobile numérique, lesquels signaux comprennent lesdites données d'informations personnalisées,
un dispositif (3) pour la démodulation/modulation, le décodage/codage desdits signaux,
des moyens (6, 8) pour la réception de commandes utilisateur,
un microcontrôleur (4) pour la réception desdites commandes utilisateur et le contrôle dudit appareil (1) et
un générateur de caractères (5) pour l'affichage desdites données d'informations personnalisées sur un dispositif d'affichage (7) couplé audit appareil,
dans lequel ladite antenne (2) et ledit dispositif (3) sont compris dans un terminal de téléphone mobile (10) qui peut être inséré dans un support approprié (9) contenu dans ledit appareil (1),
l'appareil (1) étant **caractérisé en ce que** le microcontrôleur (4) est adapté pour établir une connexion entre l'appareil (1) et le centre de service et pour permettre au centre de service de prendre en charge le contrôle d'échange d'informations au cours de la connexion établie.

2. Appareil pour la réception et l'affichage de données selon la revendication 1,
**caractérisé en ce que** ledit terminal mobile (10) est pourvu d'un connecteur d'entrée/sortie de données couplé à une prise appropriée disponible sur ledit support (9).

3. Appareil pour la réception et l'affichage de données selon la revendication 1,
**caractérisé en ce que** ledit appareil est compris dans le dispositif de charge d'un terminal de téléphone mobile numérique (10).

4. Appareil pour la réception et l'affichage de données selon la revendication 1,
**caractérisé en ce que** lesdits moyens pour la réception des commandes utilisateur sont fournis par une télécommande (8).

5. Appareil pour la réception et l'affichage de données selon la revendication 1,
**caractérisé en ce que** des moyens pour connecter l'appareil lui-même à une installation d'impression sont prévus.

6. Appareil pour la réception et l'affichage de données selon la revendication 1,
**caractérisé en ce que** ledit dispositif d'affichage (7) fait partie d'un poste de télévision.

7. Appareil pour la réception et l'affichage de données selon la revendication 6,
**caractérisé en ce que** le signal produit par le générateur de caractères (5) est un signal radiofréquence de télévision.

8. Appareil pour la réception et l'affichage de données selon la revendication 1,
**caractérisé en ce que** ledit dispositif d'affichage (7) fait partie d'un moniteur de PC.

9. Appareil pour la réception et l'affichage de données selon la revendication 1,
**caractérisé en ce que** le générateur de caractères (5) est du type utilisé dans les décodeurs de signaux de télétexte normaux.
